# EUROPEAN PATENT APPLICATION

(11) **EP 3 614 187 A1**
(43) Date of publication of application: **26.02.2020**
(21) Application number: 18215892.3
(22) Date of filing: 24.12.2018
(51) Int. Cl.: G02B 6/44

(54) **HYBRID ROUND CABLE**

(30) Priority: 23.08.2018 IN 201811031630
(71) Applicant: Sterlite Technologies Ltd, Maharashtra 431 136 (IN)
(72) Inventor: PERAKA, Sravan Kuman, 431136 Maharashtra (IN)
(74) Representative: Browne, Robin Forsythe

(57) **Abstract**

The present disclosure relates to a hybrid round cable. The hybrid round cable includes at least one optical fiber unit (102), at least one conductor unit (108), one or more layers (130, 132, 134) enclosing the at least optical fiber unit (102) and the at least one conductor unit (108) and a foam type filler (128) disposed around the at least one optical fiber unit (102) and the at least one conductor unit (108). The optical fiber unit (102) includes one or more optical fibers (104) and a first tube (106). The first tube (106) encloses the optical fibers (104). The at least one conductor unit (108) includes one or more insulated flexible conductors (112) and a second sheath (110). The second sheath (110) encloses the one or more insulated flexible conductors (112). The foam type filler (128) imparts round shape to the hybrid round cable (100).

## Description

### BACKGROUND OF THE INVENTION

### Field of the Invention.

The present disclosure relates to the field of hybrid cables. More particularly, the present disclosure relates to a hybrid round cable for blowing and pulling applications.

### Description of Prior Art

Hybrid cables are becoming popular these days because of their high performance. These hybrid cables typically combine both conductors and optical fibers having different applications. These cables are generally cost effective and have the ability to meet the projected high network performance. Besides their popularity, the currently available hybrid cables have certain limitations. The conventional hybrid cables lack in easy access and installation feature.

In light of the above mentioned drawbacks, there exists a need of a hybrid round cable which overcomes the above cited drawbacks of conventionally known hybrid cables.

The hybrid round cable of the present disclosure includes at least one optical fiber unit, at least one conductor unit, one or more layers enclosing the at least optical fiber unit and the at least one conductor unit and a foam type filler disposed around the at least one optical fiber unit and the at least one conductor unit. The at least one optical fiber unit includes one or more optical fibers and a first tube. The first tube encloses the one or more optical fibers. The at least one conductor unit includes one or more insulated flexible conductors and a second sheath. The second sheath encloses the one or more insulated flexible conductors. The foam type filler imparts round shape to the hybrid round cable. The foam type filler separates the at least one optical fiber unit and the at least one conductor unit. The round shape of the hybrid round cable enables the hybrid round cable to be pushed or pulled inside a duct for shorter distances around 100 meters.

### SUMMARY OF THE INVENTION

A primary object of the disclosure is to provide an easy accessible hybrid cable. Another object of the present disclosure is to provide a hybrid cable with round shape. Yet another object of the present disclosure is to provide a hybrid round cable for blowing and pulling applications.

Yet another object of the present disclosure is to improve the performance of hybrid round cable.

Yet another object of the present disclosure is to provide a hybrid cable with separated conductors and fibers elements to have easy access.

In an aspect, the present disclosure provides a hybrid round cable. The hybrid round cable includes at least one optical fiber unit, at least one conductor unit, one or more layers enclosing the at least optical fiber unit and the at least one conductor unit and a foam type filler disposed around the at least one optical fiber unit and the at least one conductor unit. The at least one optical fiber unit includes one or more optical fibers and a first tube. The first tube encloses the one or more optical fibers. The at least one conductor unit includes one or more insulated flexible conductors stranded together along a length of the hybrid round cable and a second sheath. The second sheath encloses the one or more insulated flexible conductors. The foam type filler imparts round shape to the hybrid round cable. The foam type filler separates the at least one optical fiber unit and the at least one conductor unit. The round shape of the hybrid round cable enables the hybrid round cable to be pushed or pulled inside a duct for shorter distances around 100 meter.

In an embodiment of the present disclosure, the one or more layers include a first layer, a second layer and a third layer. The first layer encloses the at least one optical fiber unit, the at least one conductor unit and the foam type filler. The first layer is a water blocking tape surrounding the foam type filler. The first layer has a thickness of about 0.3 millimeter. The second layer surrounds the first layer. The second layer is made of a corrugated steel tape. The second layer has a thickness of about 0.125-0.15 mm. The third layer surrounds the second layer. The third layer is a sheathing layer. The third layer is made of polyethylene. The third layer has a thickness of about 2 millimeters.

In an embodiment of the present disclosure, the foam type filler is made of polyolefin base material doped with foaming agents. The foam type filler has a density in a range of about 0.5-0.9 Kg/cm'.

In an embodiment of the present disclosure, the separation of the at least one conductor unit from the at least one optical fiber unit provides easy access to each of the at least one optical fiber unit and the at least one conductor unit.

In an embodiment of the present disclosure, the first tube of the at least one optical fiber unit is made of a thermoplastic material.

In an embodiment of the present disclosure, the at least one conductor unit includes the one or more insulated flexible conductors, a plurality of fillers and an armor layer. Each of the one or more insulated flexible conductors includes a flexible copper conductor. The flexible copper conductor is selected to have allowable voltage drop over a required distance of source to destination. The flexible copper conductor has a diameter of about 3.8 millimeters. The flexible copper conductor has a cross sectional area of about 9.95 millimeter square. The flexible copper conductor has a tensile strength of about 2687.5 Newton. Each of the one or more insulated flexible conductors further includes an insulation layer surrounding the corresponding flexible copper conductor. The insulation layer is made of flame retardant polyvinyl chloride or low smoke polyolefin materials. Each of the plurality of fillers is placed at the interstices between the one or more insulated flexible conductors and the second sheath. Each of the plurality of fillers is made of a fiber reinforced plastic (FRP). Each of the plurality of fillers has a diameter of about 2 millimeter. The armor layer is made of one of a braided steel wire, aluminium, bronze, copper or nickel plated copper. The armor layer surrounds the one or more insulated flexible conductors. The at least one conductor unit has a diameter in a range of about 2-5 millimeters. The at least one conductor unit has a thickness of about 0.8 millimeter.

In an embodiment of the present disclosure, the hybrid round cable includes a plurality of ripcords. Each of the plurality of ripcords is positioned between the first layer and the second layer.

In an embodiment of the present disclosure, the hybrid round cable has a crush resistance of about 2000 Newton per 100 millimeters.

In an embodiment of the present disclosure, the hybrid round cable has an impact strength of about 15 Newton-meter.

In an embodiment of the present disclosure, the hybrid round cable has a torsion of about ± 180 degrees.

### BRIEF DESCRIPTION OF DRAWING

Having thus described the disclosure in general terms, reference will now be made to the accompanying figure, wherein:

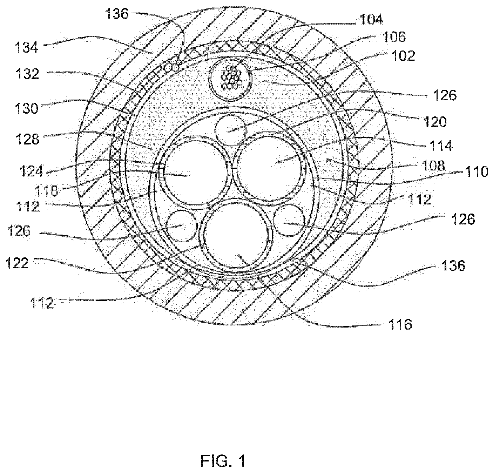

FIG. 1 illustrates a cross sectional view of a hybrid round cable, in accordance with an embodiment of the present disclosure.

It should be noted that the accompanying figure are intended to present illustrations of exemplary embodiments of the present disclosure. This figure is not intended to limit the scope of the present disclosure. It should also be noted that accompanying figure is not necessarily drawn to scale.

### DETAILED DESCRIPTION OF THE INVENTION

Reference will now be made in detail to selected embodiments of the present disclosure in conjunction with accompanying figures. The embodiments described herein are not intended to limit the scope of the disclosure, and the present disclosure should not be construed as limited to the embodiments described. This disclosure may be embodied in different forms without departing from the scope and spirit of the disclosure. It should be understood that the accompanying figure is intended and provided to illustrate embodiments of the disclosure described below and are not necessarily drawn to scale. In the drawing, like numbers refer to like elements throughout, and thicknesses and dimensions of some components may be exaggerated for providing better clarity and ease of understanding.

It should be noted that the terms "first", "second", and the like, herein do not denote any order, ranking, quantity, or importance, but rather are used to distinguish one element from another. Further, the terms "a" and "an" herein do not denote a limitation of quantity, but rather denote the presence of at least one of the referenced item.

FIG. 1A illustrates a cross sectional view of a hybrid round cable 100, in accordance with an embodiment of the present disclosure. A hybrid cable is a type of cable which combines both optical fibers and electrical conductors. Thus, a hybrid cable is used to transmit both electrical signals and optical signals. The hybrid round cable 100 as disclosed herein includes at least one optical fiber unit 102 and at least one conductor unit 108. In addition, the at least one optical fiber unit 102 includes a one or more optical fibers 104 and a first tube 106. The first tube 106 is a loose tube which encloses the one or more optical fibers 104.

Further, the at least one conductor unit 108 includes one or more insulated flexible conductors 112 stranded together and a second sheath 110. The second sheath 110 encloses the one or more insulated flexible conductors 112. Each of the one or more insulated flexible conductors 112 includes a flexible copper conductor 114, 116 and 118 surrounded by an insulation layer 120, 122 and 124. The flexible copper conductors 114, 116 and 118 are surrounded by corresponding insulation layers 120, 122 and 124. The first flexible copper conductor 114 is surrounded by the first insulation layer 120. The second flexible copper conductor 116 is surrounded by the second insulation layer 122. The third flexible copper conductor 118 is surrounded by the third insulation layer 124. Furthermore, the at least one conductor unit 108 includes a plurality of fillers 126 placed at the interstices between the one or more insulated flexible conductors 112 and the second sheath 110. The hybrid cable 100 includes a foam type filler 128. The foam type filler 128 is disposed around the at least one optical fiber unit 102 and the at least one conductor unit 108. Furthermore, the at least one optical fiber unit 102 and the at least one conductor unit 108 are embedded inside the foam type filler 128. Moreover, the hybrid round cable 100 includes one or more layers. The one or more layers concentrically enclose the at least one optical fiber unit 102 and the at least one conductor unit 108. In an embodiment of the present disclosure, the one or more layers include a first layer 130, a second layer 132 and a third layer 134. In an embodiment of the present disclosure, the hybrid round cable 100 includes a plurality of ripcords 136 positioned between the first layer 130 and the second layer 132.

The hybrid round cable 100 includes the at least one optical fiber unit 102. The at least one optical fiber unit 102 includes the first tube 106. The first tube 106 is a tube for encapsulating the one or more optical fibers 104. In an embodiment of the present disclosure, the first tube 106 of the at least one optical fiber unit 102 is made of a thermoplastic material. In an embodiment of the present disclosure, the first tube 106 of the at least one optical fiber unit 102 is made of Polybutylene Terephthalate (PBT). In another embodiment of the present disclosure, the first tube 106 of the at least one optical fiber unit 102 is made of any other suitable material. The at least one optical fiber unit 102 provides mechanical isolation, physical damage protection and identification of each of the one or more optical fibers 104. The at least one optical fiber unit 102 is of white color. In an embodiment of the present disclosure, the at least one optical fiber unit 102 may be of any other color. In an embodiment of the present disclosure, the at least one optical fiber unit 102 includes a water blocking element. The water blocking element is a thixotropic gel. In an embodiment of the present disclosure, the water blocking element may include a plurality of water swellable yarns. In an embodiment of the present disclosure, the number of water swellable yarns is 3. In another embodiment of the present disclosure, the water blocking element is made of any other suitable water repellent material. The water blocking element prevents the ingression of water inside the at least one optical fiber unit 102. Furthermore, the at least one optical fiber unit 102 is characterized by a first diameter and a second diameter. In an embodiment of the present disclosure, the first diameter of the at least one optical fiber unit 102 is about 2 millimeters. In an embodiment of the present disclosure, the second diameter of the at least one optical fiber unit 102 is about 3 millimeters. The first diameter is an inner diameter and the second diameter is an outer diameter of the at least one optical fiber unit 102. In an embodiment of the present disclosure, the at least one optical fiber unit 102 may have any suitable first diameter and the second diameter. The at least one optical fiber unit 102 includes the one or more optical fibers 104. In an embodiment of the present disclosure, the at least one optical fiber unit 102 includes 12 optical fibers. In another embodiment of the present disclosure, the at least one optical fiber unit 102 includes any suitable number of optical fibers.

Each of the one or more optical fibers 104 is a fiber used for transmitting information as light pulses from one end to another. In addition, each of the one or more optical fibers 104 is a thin strand of glass or plastic capable of transmitting optical signals. Further, the one or more optical fibers 104 are configured to transmit large amount of information over long distances with relatively low attenuation. Furthermore, each of the one or more optical fibers 104 includes a core region and a cladding region. The core region is an inner part of an optical fiber and the cladding section is an outer part of the optical fiber. Each of the one or more optical fibers 104 has a diameter of about 245 microns or 200 microns. In an embodiment of the present disclosure, the diameter of each of the one or more optical fibers 104 may vary. In addition, each of the one or more optical fibers 104 is a single mode optical fiber. In another embodiment of the present disclosure, each of the one or more optical fibers 104 is a multimode fiber. Each of the one or more optical fibers 104 has a maximum fiber attenuation of about 0.35 dB/km at a wavelength of about 1310 nanometers. In addition, each of the one or more optical fibers 104 has a maximum fiber attenuation of about 0.21 dB/km at a wavelength of about 1550 nanometers. The optical fiber attenuation may be referred to the loss of light energy as the light pulse travels from one end of the cable to the other.

Each of the one or more optical fibers 104 is a colored fiber. The color of the each of the one or more optical fibers 104 is selected from a group. The group includes blue, orange, green, brown, slate, white, red, black, yellow, violet, pink and Aqua. In an embodiment of the present disclosure, the group may include any other suitable colors. In an embodiment of the present disclosure, the hybrid round cable 100 includes 2 tight buffer units.

The hybrid round cable 100 includes the at least one conductor unit 108. The at least one conductor unit 108 is utilized for power transmission. The at least one conductor unit 108 includes the one or more insulated flexible conductors 112 stranded together and the second sheath 110. The second sheath 110 encloses the one or more insulated flexible conductors 112. In an embodiment of the present disclosure, the second sheath 110 is made of one of high density polyethylene, medium density polyethylene, polyvinyl chloride and low smoke zero halogen. In an embodiment of the present disclosure, the one or more insulated flexible conductors 112 are 3 in number. In another embodiment of the present disclosure, there may be more or less number of the one or more insulated flexible conductors 112. In an embodiment of the present disclosure, each of the one or more insulated flexible conductors 112 includes the flexible copper conductor 114, 116 and 118 surrounded by the insulation layer 130, 132 and 134. The flexible copper conductors 114, 116 and 118 are surrounded by corresponding insulation layers 130, 132 and 134. The first flexible copper conductor 114 is surrounded by the first insulation layer 120. The second flexible copper conductor 116 is surrounded by the second insulation layer 122. The third flexible copper conductor 118 is surrounded by the third insulation layer 124. In general, the three flexible copper conductors 114, 116 and 118 are used for a perfect balanced 3-phase system. The first flexible copper conductor 114, the second flexible copper conductor 116 and the third flexible copper conductor 118 are stranded together. The flexible copper conductors 114, 116 and 118 have the same structure and dimensions. In general, the flexible copper conductors 114, 116 and 118 are used for transmitting and distributing electrical energy along large distances. In an embodiment of the present disclosure, each of the flexible copper conductors 114, 116 and 118 has a first diameter of about 3.8 millimeters. The first diameter of the flexible copper conductors 114, 116 and 118 is the inner diameter of the flexible copper conductors 114, 116 and 118. Each of the flexible copper conductors 114, 116 and 118 is flexible. The insulation layers 120, 122 and 124 has the same structure and dimensions. In an embodiment of the present disclosure, the insulation layers 120, 122 and 124 has a thickness as per International standards. In an embodiment of the present disclosure, the insulation layers 120, 122 and 124 is made of FRPVC (flame retardant polyvinyl chloride) or low smoke polyolefin materials. In yet another embodiment of the present disclosure, the plurality of insulation layers 120, 122 and 124 is made of any other suitable material. The insulation layers 120, 122 and 124 is of a specific color. The color of the insulation layers 120, 122 and 124 is selected from a group. The group includes the color blue, grey, yellow and green. In an embodiment of the present disclosure, the flexible copper conductors 114, 116 and 118 have a second diameter of about 5.4 millimeters. The second diameter of the flexible copper conductors 114, 116 and 118 is the outer diameter. In an embodiment of the present disclosure, the flexible copper conductors 114, 116 and 118 have a cross section area of about 9.95 millimeters square. In an embodiment of the present disclosure, the effective diameter of the 3 flexible copper conductors is 11.524 millimeters. In an embodiment of the present disclosure, the flexible copper conductors 114, 116 and 118 have a tensile strength of about 2687.5 Newton. The tensile strength of any material corresponds to how much stress the material can endure before failure.

Further, the at least one conductor unit 108 includes the plurality of fillers 126 placed at the interstices between the one or more insulated flexible conductors 112 and the second sheath 110. In an embodiment of the present disclosure, each of the plurality of fillers 126 is made of fiber reinforced plastic (FRP). In another embodiment of the present disclosure, each of the plurality of fillers 126 is made of any other suitable material. Each of the plurality of fillers 126 has a diameter of about 2 millimeters.

In an embodiment of the present disclosure, the at least one conductor unit 108 has a first diameter of about 11.524 millimeters. The first diameter of the at least one conductor unit 108 is the inner diameter of the at least one conductor unit 108. In an embodiment of the present disclosure, the at least one conductor unit 108 has a second diameter in a range of about 2-5 millimeters. The second diameter of the at least one conductor unit 108 is the outer diameter of the at least one conductor unit 108. In an embodiment of the present disclosure, the at least one conductor unit 108 has a thickness of about 0.8 millimeters.

In an embodiment of the present disclosure, the at least one conductor unit 108 includes an armor layer. The armor layer may surround the one or more insulated flexible conductors 112. In an embodiment of the present disclosure, the armor layer is made of one of braided steel wire, aluminium, bronze, copper or nickel plated copper. In another embodiment of the present disclosure, the armor layer may be made of any other suitable material. In another embodiment of the present disclosure, the at least one conductor unit 108 may not include the armor layer.

In an embodiment of the present disclosure, the flexible copper conductors 110a-110c have a tensile strength of about 2687.5 Newton. In an embodiment of the present disclosure, each of the plurality of fillers 126 made of fiber reinforced plastic (FRP) has a tensile strength of about 847.52 Newton. The tensile strength of any material corresponds to how much stress the material can endure before failure.

The hybrid round cable 100 includes the foam type filler 128. The at least one optical fiber unit 102 and the at least one conductor unit 108 are embedded inside the foam type filler 128. The foam type filler 128 is disposed around the at least one optical fiber unit 102 and the at least one conductor unit 108. The foam type filler 128 imparts round shape to the hybrid round cable 100. The foam type filler 128 separates the at least one optical fiber unit 102 and the at least one conductor unit 108. The round shape of the hybrid round cable 100 enables the hybrid round cable 100 to be pushed or pulled inside a duct for shorter distances around 100 meter. The round shape of the hybrid round cable 100 enables easy installation inside a round shaped duct as compared to a flat shaped cable. The flat shaped cables lack push or pull performance. In an embodiment of the present disclosure, the foam type filler 128 is made of polyolefin base material doped with foaming agents material. In another embodiment of the present disclosure, the foam type filler 128 is made of any other suitable material. In an embodiment of the present disclosure, the foam type filler 128 has a density in a range of about 0.5-0.9 Kg/cm³. The foam type filler 128 enables the separation of the at least one conductor unit 108 from the at least one optical fiber unit 102. In an embodiment of the present disclosure, the separation of the at least one conductor unit 108 from the at least one optical fiber unit 102 provides easy access to each of the at least one optical fiber unit 102 and the at least one conductor unit 108.

In an embodiment of the present disclosure, the hybrid round cable 100 has a core height of about 16.1 millimeters.

In an embodiment of the present disclosure, the hybrid round cable 100 includes the first layer 130. The first layer 130 is a water blocking tape. The first layer 130 surrounds the combination of the foam type filler 128, the at least one optical fiber unit 102 and the at least one conductor unit 108. The water blocking tape is used to prevent water ingression inside the at least one optical fiber unit 102 and the at least one conductor unit 108. In an embodiment of the present disclosure, the first layer 130 has a width of about 0.56 millimeter. In another embodiment of the present disclosure, the first layer 130 has any suitable width. In an embodiment of the present disclosure, the first layer 130 has a thickness of about 0.3 millimeters. In another embodiment of the present disclosure, the first layer 130 may have any suitable thickness. The first layer 130 is enclosed by the second layer 132.

In an embodiment of the present disclosure, the hybrid round cable 100 includes the second layer 132. The second layer 132 is made of a corrugated ECCS (electrolytic chrome-coated steel) steel tape. The corrugated ECCS steel tape is used to make the hybrid round cable 100 rodent resistance. In an embodiment of the present disclosure, the second layer 132 is made of any other suitable material. In an embodiment of the present disclosure, the second layer 132 has a width of about 60 millimeters. In an embodiment of the present disclosure, the second layer 132 has a thickness of about 0.125-0.15 millimeter. In an embodiment of the present disclosure, the second layer 132 has any suitable width and thickness. Also, the second layer 132 is enclosed by the third layer 134.

In an embodiment of the present disclosure, the hybrid round cable 100 includes the third layer 134. The third layer 134 is a sheathing layer. The third layer 134 surrounds the second layer 132. In addition, the third layer 134 is a sheath of the hybrid round cable 100. The sheath of the hybrid round cable 100 provides protection to the hybrid round cable 100. The sheath of the hybrid round cable 100 provides protection to the at least one optical fiber unit 102 and the at least one conductor unit 108. Further, the third layer 134 is made of UV proof polyethylene material. The UV proof polyethylene material is black in color. In an embodiment of the present disclosure, the third layer 134 has a thickness of about 2 millimeters. In an embodiment of the present disclosure, the third layer 134 is made of any other suitable material. In another embodiment of the present disclosure, the third layer 134 may have any suitable thickness. In an embodiment of the present disclosure, the hybrid round cable 100 may or may not include an aramid yarn layer. In an embodiment of the present disclosure, the aramid yarn layer has a tensile strength of about 6.6207 Newton.

In an embodiment of the present disclosure, the hybrid round cable 100 includes the plurality of ripcords 136. The plurality of ripcords 136 is positioned in between the first layer 130 and the second layer 132. In general, the ripcords 136 are used for easy stripping of one or more layers of the hybrid round cable 100. Further, each of the plurality of ripcords 136 is made of polyester-based yarns. In an embodiment of the present disclosure, each of the plurality of ripcords 136 may be made of any other suitable material In an embodiment of the present disclosure, the hybrid round cable 100 includes two ripcords 136. Furthermore, the two ripcords 136 are placed diagonally opposite to each other between the first layer 130 and the second layer 132. In an embodiment of the present disclosure, the hybrid round cable 100 may include more or less number of ripcords 136.

In an embodiment of the present disclosure, the hybrid round cable 100 has a crush resistance of about 2000 Newton per 100 millimeters. Generally, crush resistance testing is the measurement of a compressive load to a point when a sample deforms, fractures, shatters or collapses. In an embodiment of the present disclosure, the hybrid round cable 100 has impact strength of about 15 Newton-meter. Generally, impact strength is defined as the resistance of a material to fracture by a blow. In an embodiment of the present disclosure, the hybrid round cable 100 has torsion of about ± 180 degrees. Generally, torsion is the twisting of an object due to an applied torque. In an embodiment of the present disclosure, the hybrid round cable 100 has a maximum tensile strength of about 2 kilo Newton at 0.4% fiber strain. The tensile strength of any material corresponds to how much stress the material can endure before failure. In an embodiment of the present disclosure, the hybrid round cable 100 has a minimum bend radius of about 12D. Generally, the minimum bend radius of a cable is the radius one can bend a cable without kinking it, damaging it, or shortening its life. In an embodiment of the present disclosure, the hybrid round cable 100 has temperature performance of about -10 degree Celsius to + 60 degree Celsius during installation. In an embodiment of the present disclosure, the hybrid round cable 100 has temperature performance of about -30 degree Celsius to + 60 degree Celsius during operation. In an embodiment of the present disclosure, the hybrid round cable 100 has temperature performance of about -30 degree Celsius to + 85 degree Celsius during storage. In another embodiment of the present disclosure, the hybrid round cable 100 has any suitable value of crush resistance, torsion and impact strength. In an embodiment of the present disclosure, the hybrid round cable 100 has a diameter of about 21.1 ± 0.5 millimeter and a weight of about 521 kilogram per kilometer. In another embodiment of the present disclosure, the hybrid round cable 100 may have any suitable value of cable diameter and cable weight.

In an embodiment of the present disclosure, the hybrid round cable 100 supports cable run of about 100 M. The flexible copper conductor limits the distance of length of cable due to voltage drop. The hybrid cable 100 supports upto 100 metre distance for powering active equipments. In an embodiment of the present disclosure, the hybrid round cable 100 has an output current of about 2 Ampere. In an embodiment of the present disclosure, the hybrid round cable 100 has a maximum voltage drop of about 10%.

The hybrid round cable 100 as disclosed herein is quite significant over the prior arts. The hybrid round cable 100 can be used for both blowing and pulling applications due to the round shape of the cable. The fiber unit and the conductor unit 108 are embedded inside the round shape foam type filler 128. Further, the fiber unit and the conductor unit 108 are placed inside the common jacket yet separated from each other. It enables easy access of both the fiber unit and the conductor unit 108 inside the hybrid round cable. In addition, the round shape enables the hybrid round cable 100 to be pushed or pulled inside a duct for shorter distances around 100 meter.

## Claims

1. A hybrid round cable comprising:
at least one optical fiber unit (102), wherein the at least one optical fiber unit (102) comprises one or more optical fibers (104) and a first tube (106) enclosing the one or more optical fibers (104);
at least one conductor unit (108), wherein the at least one conductor unit (108) comprises one or more insulated flexible conductors (112) and a second sheath (110) enclosing the one or more insulated flexible conductors (112);
one or more layers (130, 132, 134) enclosing the at least one optical fiber unit (102) and the at least one conductor unit (108); and
a foam type filler (128) disposed around the at least one optical fiber unit (102) and the at least one conductor unit (108), wherein the foam type filler (128) imparts round shape to the hybrid round cable (100), wherein the foam type filler (128) separates the at least one optical fiber unit (102) and the at least one conductor unit(108), wherein the round shape of the hybrid round cable (100) enables the hybrid round cable (100) to be pushed or pulled inside a duct for shorter distances around 100 meters.

2. The hybrid round cable as claimed in claim 1, wherein the one or more layers (130, 132, 134) comprises:
a first layer (130), wherein the first layer (130) is a water blocking tape surrounding the foam type filler (128), the at least one optical fiber unit (102) and the at least one conductor unit (108), wherein the first layer (130) has a thickness of about 0.3 millimeter;
a second layer (132), wherein the second layer (132) surrounds the first layer (130), wherein the second layer (132) is made of a corrugated steel tape, wherein
the second layer (132) has a thickness of about 0.125-0.15 mm; and
a third layer (134), wherein the third layer (134) surrounds the second layer (132), wherein the third layer (134) is a sheathing layer, wherein the third layer (134) is made of polyethylene, wherein the third layer (134) has a thickness of about 2 millimeters.

3. The hybrid round cable as claimed in claim 1 or 2, wherein the foam type filler (128) is made of polyolefin base material doped with foaming agents, wherein the foam type filler (128) has a density in a range of about 0.5-0.9 Kg/cm³.

4. The hybrid round cable as claimed in any preceding claim, wherein the separation of the at least one conductor unit (108) from the at least one optical fiber unit (102) enables easy access to each of the at least one optical fiber unit (102) and the at least one conductor unit (108).

5. The hybrid round cable as claimed in any preceding claim, wherein the first tube (106) of the at least one optical fiber unit (102) is made of a thermoplastic material.

6. The hybrid round cable as claimed in any preceding claim, wherein the at least one conductor unit (108) comprising:
the one or more insulated flexible conductors (112), wherein each of the one or more insulated flexible conductors (112) comprising:
a flexible copper conductor (114, 116, 118) stranded together, wherein the flexible copper conductor (114, 116, 118) is selected to have allowable voltage drop over a required distance of source to destination;
an insulation layer (120, 122, 124) surrounding the flexible copper conductor (114, 116, 118), wherein the insulation layer (120, 122, 124) is made of flame retardant polyvinyl chloride or low smoke polyolefin materials;
a plurality of fillers (126), wherein each of the plurality of fillers (126) are placed at interstices between the one or more insulated flexible conductors (112) and the second sheath (110), wherein each of the plurality of fillers (126) is made of a fiber reinforced plastic (FRP), wherein each of the plurality of fillers (126) has a diameter of about 2 millimeters; and
an armor layer, wherein the armor layer is made of one of braided steel wire, aluminium, bronze, copper or nickel plated copper, wherein the armor layer surrounds the plurality of flexible copper conductors (114, 116, 118).

7. The hybrid round cable as claimed in any preceding claim, further comprising a plurality of ripcords (136), wherein each of the plurality of ripcords (136) is positioned between the first layer (130) and the second layer (132).

8. The hybrid round cable as claimed in any preceding claim, wherein the hybrid round cable (100) has a crush resistance of about 2000 Newton per 100 millimeters.

9. The hybrid round cable as claimed in any preceding claim, wherein the hybrid round cable (100) has an impact strength of about 15 Newton-meter.

10. The hybrid round cable as claimed in any preceding claim, wherein the hybrid round cable (100) has a torsion of about ± 180 degrees.
